# EUROPÄISCHE PATENTANMELDUNG

(11) **EP 1 571 335 A1**
(43) Veröffentlichungstag der Anmeldung: **07.09.2005**
(21) Anmeldenummer: 04004765.6
(22) Anmeldetag: 02.03.2004
(51) Int. Cl.: F03D 11/04

(54) **Umlegbarer Mast einer Windturbinenanlage**

(71) Anmelder: Greiner, Thomas, 74360 Ilsfeld (DE); Gaugel, Dieter, 74074 Heilbronn (DE)
(72) Erfinder: Greiner, Thomas, 74360 Ilsfeld (DE); Gaugel, Dieter, 74074 Heilbronn (DE)

(57) **Zusammenfassung**

Es wird eine umlegbare und wieder aufrichtbare Windturbinenanlage, sowie ein Basisbetoncontainment zur Aufnahme des Hauptmastes, der Gondel und des Rotors zum Schutz gegen schwere Stürme vorgestellt.

Diese neuartige Konstruktion von Windturbinenanlagen erlaubt es, nahezu risikolos die Starkwindgebiete der Erde, die zugleich stark durch Hurrikane gefährdet sind, zu erschließen, ohne früher oder später mit einem Totalverlust der Anlagen rechnen zu müssen.

## Beschreibung

Umlegbare und wieder aufrichtbare Windturbinenanlagen zutreffend auf Turmkonstruktionen aller Art insbesondere auf Gitter- und Rohrtürme. Betonbasiscontainment zur Aufnahme des Hauptmastes inklusive der Gondel und des Rotors.

Die Erfindung gehört einmal in die Gruppe ,Mechanik schwerer Konstruktionen' wie Hebe-, Zug- und Drehbrücken sowie in den Bereich Sturmschutz.

Bisher werden Windkraftanlagen ausschließlich auf starren Turmkonstruktionen, insbesondere Stahlrohr- und Gittermasten errichtet, die fest mit einem Betonfundament verbunden und nicht umlegbar sind.

Das Problem, dieser herkömmlichen Anlagenkonstruktionen besteht darin, dass bei schweren Stürmen, deren Geschwindigkeiten die Überlebensgeschwindigkeit der Anlagen übersteigt (derzeit ca. 250 km/h), mit einem Totalverlust der Anlagen zu rechnen ist.
Hurrikanes der Kategorie 5 erreichen weit über 300 km/h. Somit können mit dem derzeitigen Stand der Technik einige Starkwindgebiete der Erde, wie z. B. der karibische Raum nicht oder nur mit erheblichen Risiken für die Gewinnung alternativer Energie aus Windkraft erschlossen werden. Außerdem sind für die Errichtung der Anlagen bei Turmhöhen von bis zu 110 Metern im herkömmlichen Sinne kostenintensive Spezialkräne und Montagespezialisten erforderlich, die in den in Frage kommenden Gebieten oft nicht zur Verfügung stehen.

Mit der angemeldeten Erfindung [Patentansprüche 1.) , 2.) und 3.)] werden die oben angeführten Probleme gelöst.
Sie zeichnet sich insbesondere dadurch aus, dass sie an der Basis der Hauptmasten über eine Achse verfügt und fest mit einem Auslegermast in einem Innenwinkel zwischen 90° und 150° (idealer weise 120°) verbunden ist. Der Auslegermast verfügt am Ende über eine Konstruktion, welche die Montage von Gegengewichten aus Beton, Eisen , Blei etc. zulässt.

Des weiteren ist im Auslegermast oder auf der Gegengewichtskonstruktion ein Wassertank vorgesehen, der einen Spielraum des Gesamtgegengewichts zum Hauptmast durch befüllen oder entleeren des selben zwischen 90 und 115 % ermöglicht.
Alternativ sind verschiebbare Zusatzgewichte oder Stahlseilwinden vorgesehen, welche die Funktion des Wassertanks ersetzen. ( siehe Skizze I und II).

Des weiteren zeichnet sich die Konstruktion durch das Vorhandensein eines Basis Betoncontainments aus, das unterhalb des natürlichen Bodenreliefs liegt und nach Umlegen des Hauptmastes in die Horizontale die gesamte Windturbinenanlage inkl. Hauptmast, Gondel und Rotor aufnimmt.
Das Basis Betoncontainment ist mit Rollmarkisen aus Stahl, Aluminium oder Kunststoff abdeckbar. ( siehe Skizze III und IV ).

Mit dieser Erfindung können die Anlagen rechtzeitig vor dem Eintreffen schwerer Stürme abgestellt, umgelegt und im Basis Betoncontainment sicher verstaut werden. Nach abflauen der Stürme werden die Anlagen wieder aufgerichtet und die Produktion wieder aufgenommen.
Mit dieser Konstruktion ist also ein Überleben der Anlagen auch schwerster Stürme zu 100% gesichert.
Ein weiterer Vorteil der Erfindung ist die Revolutionierung des Zusammenbaus und der Errichtung der Anlagen, denn sie können in der Horizontalen unter verzicht hochreichender Spezialkräne und Hochbauspezialisten zusammengebaut und dann aufgerichtet werden. Außerdem werden größere Wartungsarbeiten wie z. B. der Austausch von Rotorblättern, Getriebeteilen etc. enorm erleichtert, weil diese Arbeiten nach umlegen der Anlage in horizontalem Zustand durchgeführt werden können. Die damit verbundenen Kosteneinsparungen gegenüber der herkömmlichen Technik sind enorm.

Die Skizze I zeigt die wesentlichen Konstruktionsmerkmale bei einer Windkraftanlage mit Stahlgitterturm.

Die Skizze 11 zeigt die wesentlichen Konstruktionsmerkmale bei einer Windkraftanlage mit Stahlrohrturm.

Die Skizze III zeigt eine Aufsicht auf den unteren Teil des Basis Betoncontainments verbunden mit dem Hauptfundament, das im aufgerichteten Zustand der Anlage den Auslegermast mit dem Gegengewicht aufnimmt.

Die Skizze IV zeigt eine Aufsicht auf den oberen Teil des Basis Betoncontainments, das im umgelegten Zustand den Hauptmast, die Gondel und die Rotorblätter aufnimmt.

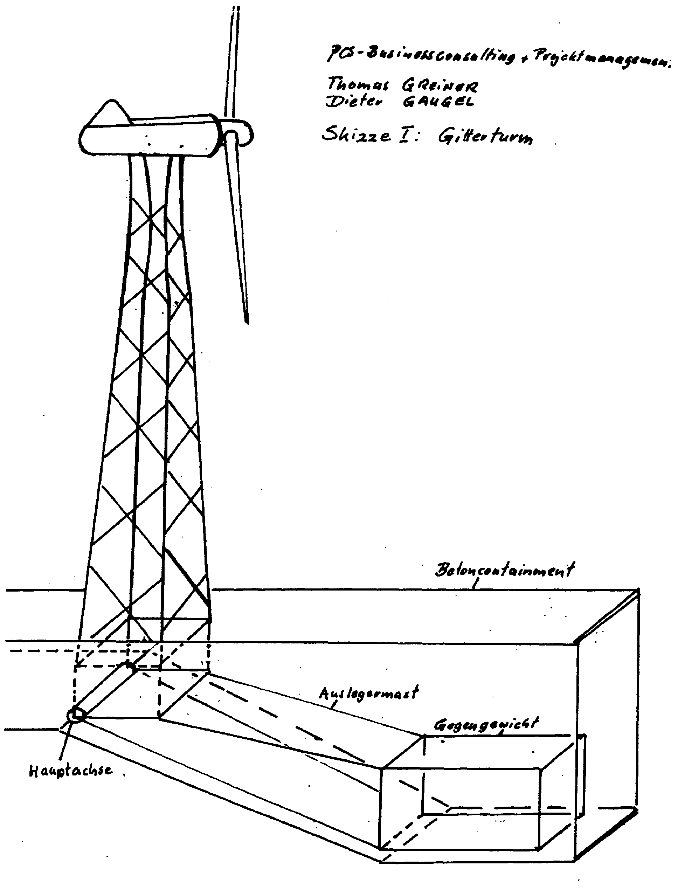

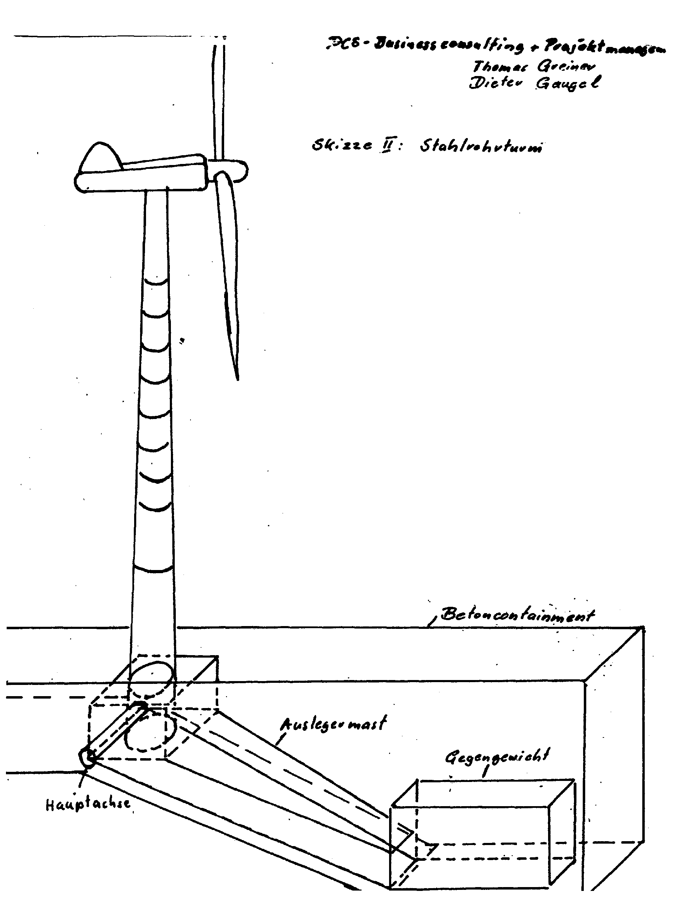

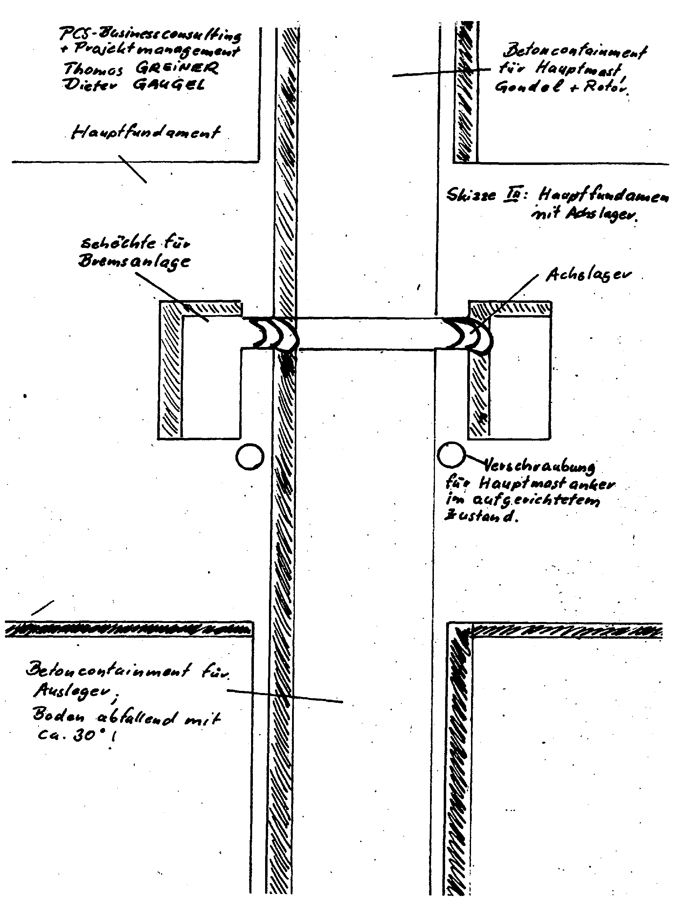

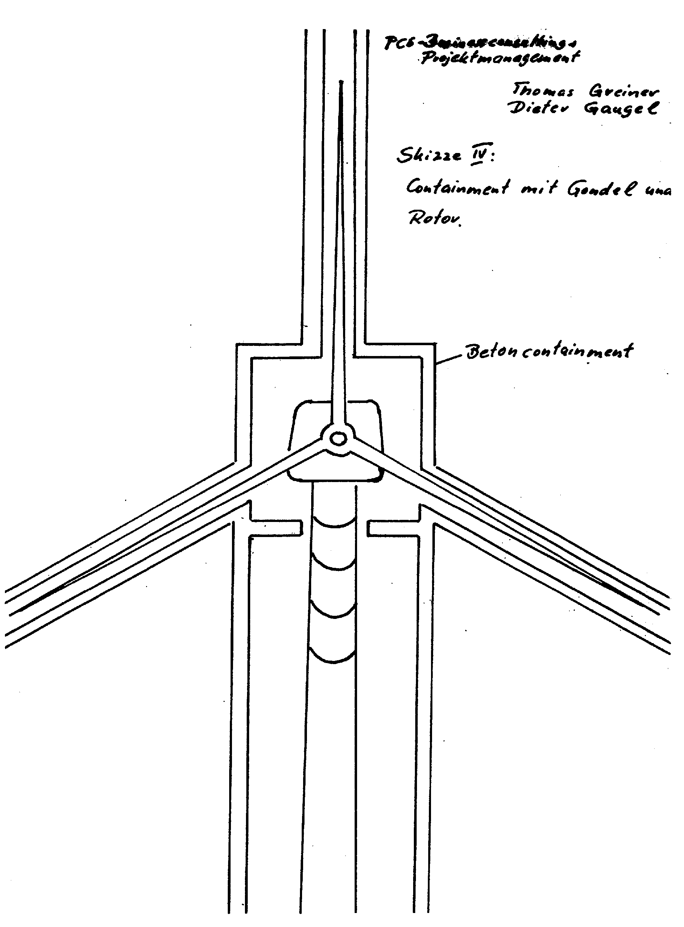

## Patentansprüche

1. Gitter- und Rohrmasten von Windturbinenanlagen
**dadurch gekennzeichnet, dass** die Masten inklusive Aufbau ( Gondel und Rotor )
a.) an der Basis über eine Achse verfügen, so dass sie umlegbar werden
und
b.) fest mit einem Auslegermast in einem Innenwinkel zwischen 90 und 150 Grad verbundenen sind, der am Ende mit einem Gegengewicht versehen ist, um einen Lastausgleich beim umlegen der Anlage aus der Vertikalen in die Horizontale und umgekehrt zu schaffen.
c.) Das Gegengewicht ist **dadurch gekennzeichnet, dass** es zusammen mit dem Auslegereigengewicht ca. 90 % des Gewichtes des Hauptmastes inklusive seiner Aufbauten ausgleicht und über einen zusätzlichen Gegengewichtsspielraum zur Hauptanlage zwischen 90% und 115 % verfügt. Dies wird erreicht durch:
1.-1 Befüllen bzw. Entleeren eines im Auslegermast befindlichen oder als Aufbau auf dem Gegengewicht angebrachten Wassertanks oder
2.0 durch verschiebbare Gewichte entlang des Auslegers oder
3.0 durch die Anwendung aller Arten von Motoren in Verbindung mit Seilwinden, Hydraulik- oder Pneumatiksystemen, die die notwendige Zusatzkraft zum Aufrichetn der Anlagen bzw. die Bremskraft beim Umlegen der Anlagen aufbringen.
d.) Die Hauptachse am Mastfuß der Anlage ist **dadurch gekennzeichnet, dass** sie an den beiden Enden mit Bremsscheiben versehen ist, die es über eine hydraulische oder pneumatische Bremsanlage ermöglichen, die Bewegungen beim Aufrichten bzw. Umlegen der Anlage zu kontrollieren. Dies gilt nur für die oben beschrieben Varianten c 1.0 und c 2.0. Als Varianten soll ebenfalls die Anwendung aller Arten von Motoren in Verbindung mit Getrieben montiert an der Hauptachse geschützt werden, die dem Zweck dienen, die Anlagen umzulegen bzw. aufzurichten.

2. Basisbetoncontainment das **dadurch gekennzeichnet ist, dass** es
a.) unter dem natürlichen Bodenrelief liegt,
b.) fest mit dem Hauptfundament der Anlagen verbunden ist,
c.) dass nach Umlegen der Windturbinenanlagen den Hauptmast, die Gondel und die Rotorblätter vollständig aufnimmt, um die Anlage ohne Demontage gegen Stürme zu schützen, welche die Überlebensgeschwindigkeit der Anlagen übersteigen und somit das Überleben der Anlagen garantieren und
d.) im Bedarfsfall durch Markisen aus Stahl, Aluminium oder Kunststoff abdeckbar ist.

3. Zusammenbau, Errichtung und Wartung der Windturbinenanlagen
**gekennzeichnet durch**
den Verzicht auf große und kostenintensive Spezialkräne und Hochbauspezialisten, weil die Anlagen in der Horizontalen montiert oder gewartet werden können und nach
fertiger Endmontage oder Wartung mit Hilfe der in Punkt 1.) beschriebenen Konstruktionen wieder aufgerichtet werden können.

## Geänderte Patentansprüche

### Geänderte Patentansprüche gemäss Regel 86(2) EPÜ.

**1.** Zweiteiliges Basis Betoncontainment das **dadurch gekennzeichnet ist**,
a.) dass es komplett unter dem natürlichen Bodenrelief liegt,
b.) dass es aus zwei getrennten Teilen besteht.
Der eine Teil ist an das Hauptfundament entgegen der Hauptwindrichtung angegliedert und nimmt im aufgerichteten Zustand der Anlage den Auslegermast und die darauf montierten Lastausgleichsgewichte auf.
Der andere Teil ist in Hauptwindrichtung an das Hauptfundament angegliedert und nimmt im umgelegten Zustand der Anlage den Turm, die Gondel und den Rotor auf.
c.) dass es aus armierten Stahlbeton oder Stahlbetonfertigteilen gefertigt wird und auch über eine solide Stahlbetonbodenplatte verfügt.
d.) dass der Boden mit Auflagepuffern versehen ist um die Lasten des Turms, der Gondel und der Rotorblätter im umgelegten Zustand zu verteilen.
e.) dass es über Rollmarkisen aus Stahl-, Aluminium- oder Kunststoff verfügt, die im Bedarfsfall zur Abdeckung bei schweren Stürmen verwendet werden. Die Laufschienen für die Rollmarkisen sind in die Seitenwänden des Basis Betoncontainments integriert.
f.) dass es so dimensioniert ist, dass die gesamte Windkraftanlage im liegen zusammengebaut als auch gewartet werden kann.
